# EUROPEAN PATENT SPECIFICATION

(11) **EP 3 754 218 B1**
(45) Date of publication and mention of the grant of the patent: **24.12.2025**
(21) Application number: 19754234.3
(22) Date of filing: 08.02.2019
(51) Int. Cl.: F16C 41/00, F16C 19/14, F16C 19/52, F16C 19/54, B21B 38/00, F16C 19/26

(54) **BEARING DEVICE AND SPINDLE DEVICE**
LAGERVORRICHTUNG UND SPINDELVORRICHTUNG
DISPOSITIF DE TYPE PALIER ET DISPOSITIF DE TYPE BROCHE

(30) Priority: 13.02.2018 JP 2018022950; 09.10.2018 JP 2018190852
(43) Date of publication of application: 23.12.2020
(73) Proprietor: NTN Corporation, Osaka-shi, Osaka 550-0003 (JP)
(72) Inventor: SHIBUYA, Yusuke, Iwata-shi, Shizuoka 438-8510 (JP); KOIKE, Takashi, Iwata-shi, Shizuoka 438-8510 (JP); FUKUSHIMA, Yasuyuki, Iwata-shi, Shizuoka 438-8510 (JP)
(74) Representative: Bockhorni & Brüntjen Partnerschaft Patentanwälte mbB
(86) International application number: PCT/JP2019/004617
(87) International publication number: WO 2019/159838

(56) References cited:
- EP-A1- 2 037 141
- WO-A1-2016/175322
- JP-A- 2002 340 922
- JP-A- 2004 169 756
- JP-A- 2010 194 684
- JP-A- 2016 131 004
- JP-A- 2017 090 318
- JP-A- 2017 187 450
- JP-A- 2017 187 450
- JP-A- 2017 187 451
- US-A1- 2010 306 991
- US-A1- 2017 291 204

## Description

### TECHNICAL FIELD

The present invention relates to a bearing device and a spindle device.

### BACKGROUND ART

In a bearing device described in Japanese Patent Laying-Open No. 2017-26078 (Patent Literature 1), an attachment unit is provided at an end surface of the bearing in order to prevent a problem such as seizing of a bearing. The attachment unit includes: a pump for supplying oil to a bearing portion; and a non-contact sensor (infrared sensor) for measuring a temperature of a lubrication portion. When a temporal change in temperature obtained from the temperature sensor becomes more than a threshold value, an increase in temperature is prevented by supplying oil to the bearing portion using a pump.

### CITATION LIST

### PATENT LITERATURE

PTL 1: Japanese Patent Laying-Open No. 2017-26078
PTL 2: Japanese Patent Laying-Open No. 2016-166832
PTL 3: US 2017/291204 A1
PTL 4: JP 2004 169756 A
PTL 5: WO 2016/175322 A1
PTL 6: US 2010/306991 A1
PTL 7: JP 2010 194684 A

### SUMMARY OF INVENTION

### TECHNICAL PROBLEM

In the bearing device described in Japanese Patent Laying-Open No. 2017-26078, a sign of abnormality to occur in the bearing is determined based on the temperature. For the non-contact temperature sensor provided in the attachment unit disposed adjacent to the bearing, it is difficult to measure a temperature of a metal surface having a low infrared emissivity. Hence, a target for the measurement by the non-contact temperature sensor (infrared sensor) is a cage composed of a resin. However, when the cage is not composed of a resin, it is difficult to measure a temperature thereof using the structure described in Japanese Patent Laying-Open No. 2017-26078. Moreover, since the non-contact temperature sensor has a lower measurement precision than that of a contact type temperature sensor, the non-contact temperature sensor may incorrectly detect an abnormality even when there occurs no such abnormality. Further, it is considered that when used in an oil lubrication environment, the non-contact temperature sensor is affected by the lubrication oil. The lubrication oil is formed into mist, which then enters between the measurement target and the non-contact temperature sensor. This makes it difficult to precisely measure a temperature.

A monitoring device which monitors a forming machine that includes a housing, a bearing attached to the housing and a shaft placed radially inside the bearing, is disclosed in US 2017/0291204 A1. Heat flux sensors are provided on the radially outer side of the bearing in order to output a signal corresponding to heat fluxes through faces thereof on the bearing side and faces thereof on the other side. JP 2004-169756 A discloses a bearing apparatus with a sensor used in order to carry out an abnormality detection of the bearing of a spindle, whereby the abnormality of a bearing shall be detected rapidly and correctly with this bearing apparatus. Furthermore, WO 2016/175322 A1 discloses an abnormality diagnosis system having similar features as the monitoring device referred to above. Further state of the art is disclosed in US 2010/306 991 A1 which relates to a method of making spacers of a kind used in a spindle device, in which a main shaft is rotatably supported by a plurality of bearing units and inner and outer ring spacers that are arranged between neighboring bearing units. The spindle device according to this state-of-the-art document can be manufactured compact in size and at a reduced cost. However, all referred state of the art documents above can not provide a high accuracy of abnormality detection.

The document JP 2010 194684 A discloses a bearing device according to the preamble of claim 1.

The present invention has been made to solve the above-described problem, and has an object to provide a bearing device and a spindle device including the bearing device, by each of which a temperature change of a bearing can be detected precisely and quickly.

### SOLUTION TO PROBLEM

The above mentioned problem is solved by a bearing device according to claim 1. In summary, the present invention is directed to a bearing device for supporting a rotation body using a single bearing or a structure with a plurality of bearings and a spacer, the single bearing or each of the plurality of bearings including an inner ring and an outer ring. The bearing device includes a heat flux sensor that is disposed at the inner ring, the outer ring, or the spacer, and that detects a heat flux.

The spacer includes an outer ring spacer and an inner ring spacer. The heat flux sensor is disposed at a non-rotation side spacer of the inner ring spacer and the outer ring spacer.

In an alternative which is not part of the claimed invention, the spacer includes an outer ring spacer and an inner ring spacer. The heat flux sensor is disposed at a rotation side spacer of the inner ring spacer and the outer ring spacer.

According to the claimed invention, the spacer includes an outer ring spacer and an inner ring spacer. The outer ring spacer includes a main body portion, and a protrusion that protrudes from a side surface of the main body portion toward an outer diameter surface of the inner ring. The heat flux sensor is fixed to the protrusion to face the outer diameter surface of the inner ring.

The heat flux sensor is disposed at a non-rotation side bearing ring of the inner ring and the outer ring. In an alternative which is not part of the claimed invention, the heat flux sensor is disposed at a rotation side bearing ring of the inner ring and the outer ring.

In an alternative which is not part of the claimed invention, the heat flux sensor is disposed in an inside of the single bearing or each of the plurality of bearings in a width direction of the single bearing or each of the plurality of bearings at a portion of the inner ring other than a raceway surface of the outer diameter surface of the inner ring or a portion of the outer ring other than a raceway surface of the inner diameter surface of the outer ring.

In an alternative which is not part of the claimed invention, the bearing device further includes a transmission unit that wirelessly transmits output information of the heat flux sensor to outside. The transmission unit transmits the output information of the heat flux sensor to a reception device that performs an abnormality determination for the single bearing or each of the plurality of bearings.

Preferably, the bearing device further includes: a temperature sensor disposed in addition to the heat flux sensor; and an abnormality diagnosis unit that diagnoses an abnormality of the single bearing or each of the plurality of bearings based on an output of the heat flux sensor, an output of the temperature sensor, and a rotation speed signal.

### ADVANTAGEOUS EFFECTS OF INVENTION

According to the present invention, a temperature change of a bearing can be detected precisely and quickly without limiting a material used for the bearing.

### BRIEF DESCRIPTION OF DRAWINGS

Fig. 1 shows a configuration of a bearing device according to a first embodiment.
Fig. 2 shows a structure around a main shaft in a machine tool in which the bearing device according to the present embodiment is disposed.
Fig. 3 is a diagram for illustrating a characteristic of a heat flux sensor used in the first embodiment, Fig. 3 (a) is a graph in which the vertical axis represents an output of the heat flux sensor and the horizontal axis represents passage of time before and after occurrence of abnormality, and Fig. 3 (b) is a graph in which the vertical axis represents an output of the temperature sensor and the horizontal axis represents passage of time before and after occurrence of abnormality.
Fig. 4 shows an exemplary arrangement of heat flux sensors when seen in an axial direction.
Fig. 5 shows an example in which a temperature sensor 22 is provided at an outer ring 2 of a bearing.
Fig. 6 is a flowchart for illustrating a first example of an abnormality determination process performed by an abnormality diagnosis device.
Fig. 7 is a flowchart for illustrating a second example of the abnormality determination process performed by the abnormality diagnosis device.
Fig. 8 shows a configuration of a bearing device according to a second embodiment.
Fig. 9 shows a modification in which heat flux sensors 7 are disposed at positions close to inner rings 4.
Fig. 10 shows a modification in which temperature sensors are added to a spacer.
Fig. 11 shows a modification in which non-contact type temperature sensors are added to a spacer.
Fig. 12 shows a configuration of a bearing device according to a third embodiment.
Fig. 13 shows a configuration for wirelessly transmitting and receiving an output of a sensor.
Fig. 14 shows a configuration of a bearing device according to a fourth embodiment.
Fig. 15 shows a configuration of a bearing device according to a fifth embodiment.
Fig. 16 is a cross sectional view when seen from a line segment XVI-XVI in Fig. 15.
Fig. 17 is a cross sectional view when seen from a line segment XVII-XVII in Fig. 15.
Fig. 18 shows a configuration of a modification of the bearing device according to the fifth embodiment.
Fig. 19 shows a configuration of another modification of the bearing device according to the fifth embodiment.
Fig. 20 shows a configuration of a spindle device including the bearing device according to the fifth embodiment.
Fig. 21 shows an exemplary controller of the spindle device shown in Fig. 20.
Fig. 22 shows another exemplary controller of the spindle device shown in Fig. 20.
Fig. 23 shows a configuration of the spindle device including the controller shown in Fig. 22.
Fig. 24 shows a still another exemplary controller of the spindle device shown in Fig. 20.
Fig. 25 shows a configuration of a modification of the spindle device including the bearing device according to the fifth embodiment.

### DESCRIPTION OF EMBODIMENTS

The following describes embodiments of the present invention with reference to figures. It should be noted that in the below-described figures, the same or corresponding portions are given the same reference characters and are not described repeatedly.

### [First Embodiment]

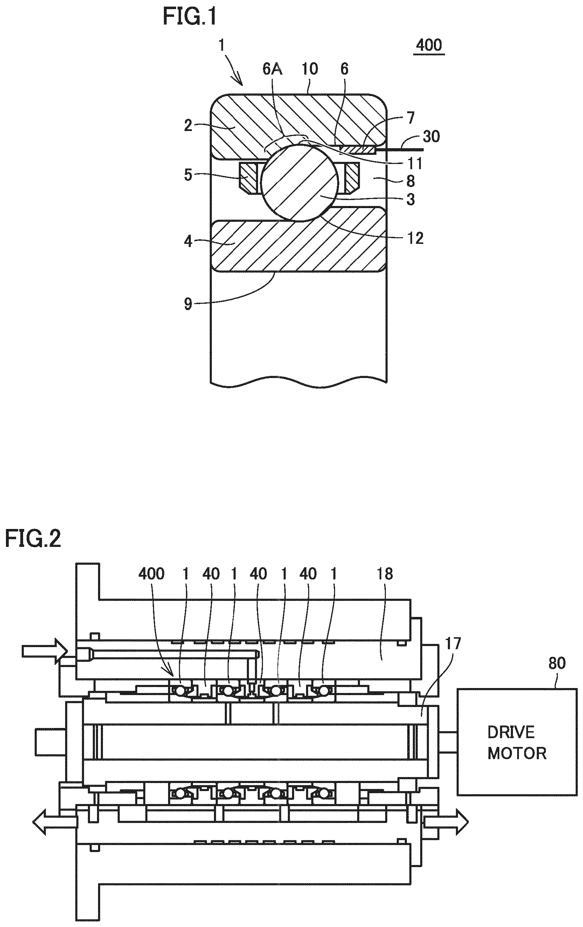

Fig. 1 shows a configuration of a bearing device 400 according to a first embodiment. The bearing device shown in Fig. 1 is a bearing device for supporting a rotation body using a single bearing or a structure in which a spacer is interposed between a plurality of bearings. A bearing 1 includes an inner ring 4, an outer ring 2, a rolling element 3, and a cage 5. Bearing 1 is a rolling bearing such as an angular contact ball bearing. That is, rolling element 3 is a ball, for example. The bearing device includes bearing 1 and a heat flux sensor 7 that is disposed at outer ring 2 and that detects a heat flux. In bearing 1 shown in Fig. 1, inner ring 4 serves as a rotation ring, whereas outer ring 2 serves as a non-rotation ring. Heat flux sensor 7 is attached to outer ring 2 serving as the non-rotation ring, and outputs a signal to an abnormality diagnosis unit (not shown) via a wiring 30. More preferably, as shown in Fig. 1, heat flux sensor 7 is disposed in an inside of bearing 1 in a width direction of bearing 1 at a portion of an inner diameter surface 6 of outer ring 2 other than a raceway surface 6A that is in abutment with rolling element 3.

Fig. 2 shows a structure around a main shaft in a machine tool in which the bearing device of the present embodiment is disposed. A main shaft 17 is directly coupled to a rotation shaft of a drive motor 80. Bearing 1 is disposed at a boundary portion between a housing 18 and main shaft 17. Main shaft 17 is rotatably supported by four bearings 1. Spacers 40 are disposed between bearings 1.

Housing 18 is provided with inlet and outlet for cooling air (air oil or oil mist). With flow of air indicated by arrows, heat generated in each bearing 1 between main shaft 17 and housing 18 is cooled. Main shaft 17 is rotated at a high speed.

In the present embodiment, heat flux sensor 7 is used to measure a change in bearing temperature during an operation. For heat flux sensor 7, the heat flux sensor described in Japanese Patent Laying-Open No. 2016-166832 (Patent Literature 2) can be used, for example. An output voltage of the heat flux sensor is generated in accordance with a slight temperature difference between front and rear sides of the sensor. Heat flux sensor 7 converts a heat flow into an electrical signal using the Seebeck effect.

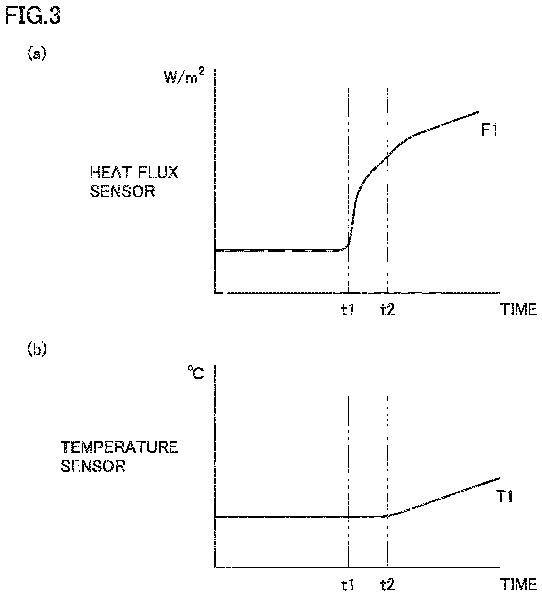

Each of Fig. 3 (a) and Fig. 3 (b) is a diagram for illustrating a characteristic of the heat flux sensor used in the first embodiment. Each of Fig. 3 (a) and Fig. 3 (b) schematically shows a difference between an output F1 of the heat flux sensor and an output T1 of a thermocouple generally used to measure a temperature. In a stationary state, there is no large difference between the slope of output F1 and the slope of output T1; however, when an abnormality occurs at a time t1, the slope of the graph of output F1 of the heat flux sensor is greatly changed at time t1. The slope of output T1 of the thermocouple is changed at a time t2 after time t1, but is not changed as large as the change of the slope of output F1 of the heat flux sensor.

Therefore, heat flux sensor 7 can quickly detect a non-stationary state immediately after occurrence of abnormality.

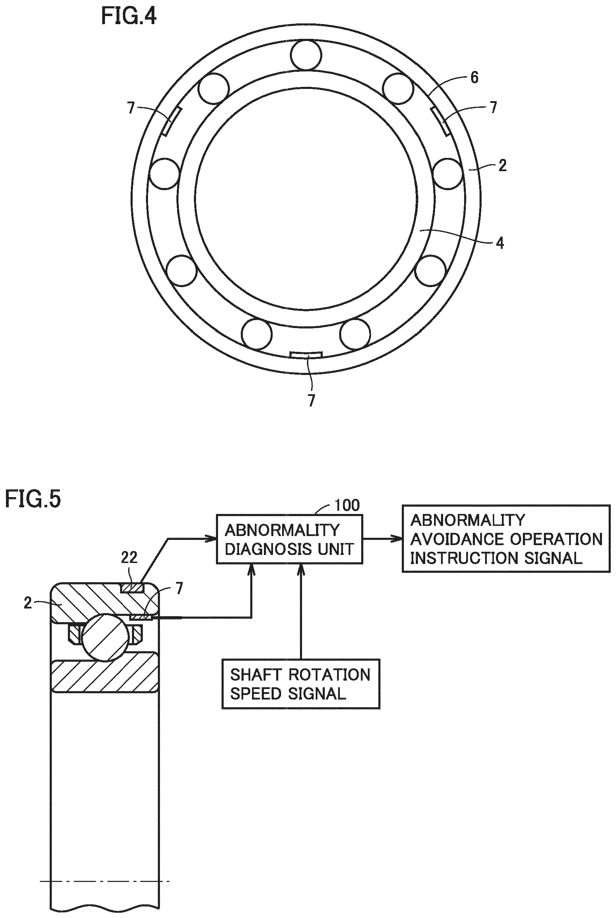

Fig. 4 shows an exemplary arrangement of heat flux sensors when seen in an axial direction. Here, it is illustratively described that heat flux sensors 7 are provided at three locations with equal intervals on inner diameter surface 6 of outer ring 2 in a circumferential direction of the outer ring. A heat flux sensor 7 may be adhered to one location on the circumference of inner ring 4 or outer ring 2; however, by adhering heat flux sensors 7 at a plurality of locations with equal intervals as shown in Fig. 4, a temperature distribution can be monitored, whereby an abnormality can be detected more precisely and quickly.

The bearing device shown in Fig. 1 includes inner ring 4, outer ring 2, rolling element 3, and cage 5, and forms a rolling bearing. Heat flux sensor 7 is adhered to outer ring 2. In Fig. 1, heat flux sensor 7 is adhered to inner diameter surface 6 of the outer ring. Heat flux sensor 7 generates an output voltage based on a temperature difference between the temperature of outer ring 2 to which heat flux sensor 7 is adhered and the temperature of a rotation atmosphere 8 resulting from rotation of inner ring 4, rolling element 3, cage 5 and the like.

Generally, when a main shaft bearing of a machine tool is seized, a slight temperature difference is caused between its inner ring and outer ring. By sensing this temperature difference quickly using heat flux sensor 7, an abnormality can be detected at an early stage before bearing 1 is seized.

As shown in Fig. 3, when there is no abnormality, output F1 of heat flux sensor 7 is constant or changed gradually depending on a change in rotation speed or an operation state; however, when an abnormality occurs, a temperature change occurs at a certain portion to cause a great change in heat flow, with the result that a great change appears in output F1 of heat flux sensor 7. By using the great change in the output of heat flux sensor 7, occurrence of abnormality in bearing 1 can be detected.

On this occasion, heat flux sensor 7 is attached close to a rotation side member. Heat flux sensor 7 generates an output voltage based on a temperature difference between a surface temperature of a non-rotation side member and a surface temperature of the rotation side member. An amount of change in this output voltage of the heat flux sensor is monitored. When a change (abnormal change) to deviate from the stationary state is detected, it is determined that an abnormality occurs in the bearing.

For example, regarding a temperature increase resulting from an increased surface pressure between the rolling element and the raceway surface of the bearing, there is a lag until heat generated between the rolling element and the raceway surface of the bearing is transferred to the rotation shaft or the housing that holds the bearing to increase the temperature of the inner ring, the outer ring, or the spacer, because the rotation shaft or the housing has a large heat capacity. Since there is a lag in temperature increase, it is considered that a sign of seizing of the bearing cannot be detected by measuring the temperature of the inner ring, the outer ring, the spacer, or the like; however, abrupt heat generation can be quickly detected using the heat flux sensor because the heat flow is changed quickly while the temperature is changed slowly.

It should be noted that in addition to heat flux sensor 7, occurrence of seizing may be determined based on rotation speed information and a result of directly or indirectly measuring the temperatures of the inner ring and outer ring of the bearing. Fig. 5 shows an example in which a temperature sensor 22 is provided at outer ring 2 of the bearing. In the configuration shown in Fig. 5, in addition to bearing 1 and heat flux sensor 7, the bearing device further includes: temperature sensor 22 disposed in addition to heat flux sensor 7; and an abnormality diagnosis unit 100 that diagnoses an abnormality of the bearing based on an output of heat flux sensor 7, an output of temperature sensor 22, and a rotation speed signal.

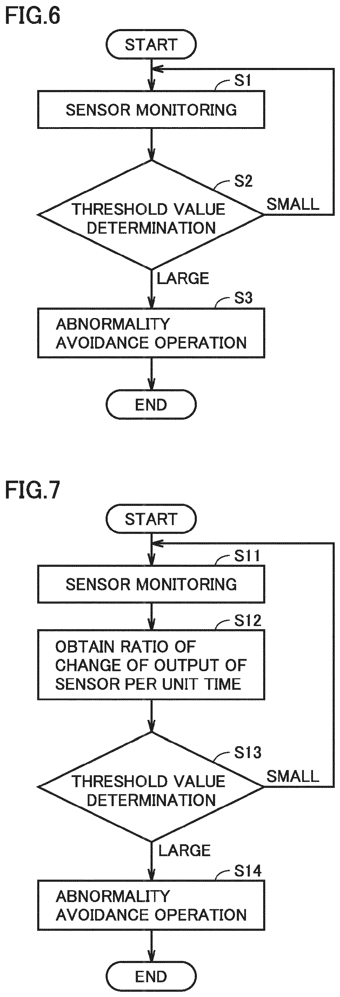

Fig. 6 is a flowchart for illustrating a first example of an abnormality determination process performed by the abnormality diagnosis device. Abnormality diagnosis unit 100 monitors outputs of the sensors in a step S1. Examples of the sensors include heat flux sensor 7, temperature sensor 22, and a rotation speed detection sensor not shown in the figures. Next, in a step S2, abnormality diagnosis unit 100 compares a threshold value provided to correspond to the output of each sensor with a value detected by the sensor so as to perform a threshold value determination as to whether the threshold value is exceeded. The threshold value determination may be individually performed for each output of the sensors, or may be performed for a combination of the sensors. A conceivable example of the combination is as follows. That is, it is determined that an abnormality occurs in the case where the rotation speed exceeds a predetermined rotation speed, the temperature exceeds a predetermined temperature, and the output of the heat flux sensor exceeds a predetermined threshold value.

When the detection value is smaller than the threshold value in step S2, the sensor monitoring process of step S1 is performed again repeatedly. On the other hand, when the detection value is larger than the threshold value in step S2, abnormality diagnosis unit 100 outputs an instruction signal for avoiding an abnormal operation so as to perform an abnormality avoidance operation in a step S3.

Examples of abnormality avoidance operation control performed in a machine tool in accordance with this instruction signal include: control for decreasing the rotation speed to be lower than the present rotation speed; control for decreasing an amount of cut-in of a cutter to be smaller than the present amount of cut-in; control for supplying lubrication oil or increasing an amount of supply of the lubrication oil; stop of processing (cutting is halted and a spindle rotation speed is decreased or rotation thereof is stopped); and the like. It should be noted that when presence/absence of abnormality is determined by performing threshold value determination S2 once, an incorrect determination may be made due to noise. In order to avoid such an incorrect determination, it may be determined that an abnormality occurs when the abnormality is detected successively multiple times, and then transition may be made to abnormality avoidance operation S3.

Fig. 7 is a flowchart for illustrating a second example of the abnormality determination process performed by the abnormality diagnosis device. Abnormality diagnosis unit 100 monitors outputs of the sensors in a step S11. Examples of the sensors include heat flux sensor 7, temperature sensor 22, and the rotation speed detection sensor not shown in the figures. Next, in a step S12, abnormality diagnosis unit 100 calculates a ratio of change of each output of the sensors per unit time, and it is then determined whether or not the ratio of change calculated in a step S13 exceeds a criterion value (ratio-of-change determination).

The ratio-of-change determination may be individually performed for each output of the sensors, or may be performed for a combination of the sensors. A conceivable example of the combination is as follows. That is, it is determined that an abnormality occurs in the case where the temperature exceeds a predetermined temperature and the ratio of increase of the output of the heat flux sensor exceeds a criterion value when the rotation speed is a certain rotation speed.

When the ratio of change is smaller than the criterion value in step S13, the sensor monitoring process of step S11 is performed again repeatedly. On the other hand, when the detection value is larger than the threshold value in step S13, abnormality diagnosis unit 100 outputs an instruction signal for avoiding an abnormal operation so as to perform an abnormality avoidance operation in a step S14. Also in this case, in order to suppress an incorrect determination due to noise or the like, it may be determined that an abnormality occurs when the abnormality is detected successively multiple times.

Exemplary abnormality avoidance operation control performed in the machine tool in accordance with this instruction signal is the same as that in the case of Fig. 6, and therefore will not be described repeatedly.

In the bearing device of the first embodiment, the temperature of the inner ring or outer ring of the non-rotation side bearing is regarded as a reference temperature, and the heat flux sensor is employed to detect a heat flow resulting from a difference between the reference temperature and the temperature of the surface of the heat flux sensor, whereby occurrence of abnormality (a sign of seizing or the like) in the bearing can be detected at an early stage based on a change in electromotive force. Hence, the operation speed of the machine tool can be reduced or the like to prevent damage of the bearing.

Moreover, since the heat flux sensor is provided at the non-rotation side, the wiring for transmitting the output of the sensor to outside is routed readily.

Further, when a temperature of an inner ring (or a temperature of an inner ring spacer) is measured using, for example, a non-contact temperature sensor, the surface of the inner ring (or the surface of the inner ring spacer) is desirably surface-treated to increase an infrared emissivity; however, according to the abnormality detection device according to the present embodiment, a material for the bearing is not limited, and by using the heat flux sensor, the emissivity of a measured portion does not need to be taken into consideration unlike a case of a radiation thermometer.

Moreover, by using the heat flux sensor, it is possible to detect a slight change in heat flux. Hence, generation of heat can be detected more quickly than that in the case of a thermometer.

Since heat flux sensor 7 is adhered to the inner diameter side of the outer ring as shown in Fig. 1, measurement can be performed near a region at which heat is generated, whereby detection sensitivity and detection speed can be improved.

### [Second Embodiment]

In the first embodiment, it has been illustratively described that heat flux sensor 7 is adhered to inner diameter surface 6 of the outer ring of the bearing. In a second embodiment, it will be illustratively described that heat flux sensor 7 is provided at a spacer. By providing heat flux sensor 7 at the spacer, a standard bearing can be used for the bearing. Accordingly, the bearing can be readily replaced in response to deterioration with age.

A bearing device 401 supports a rotation body using a structure in which a spacer is interposed between two bearings. In this bearing device, the heat flux sensor is attached to the non-rotation side (for example, an outer ring spacer) of the spacer.

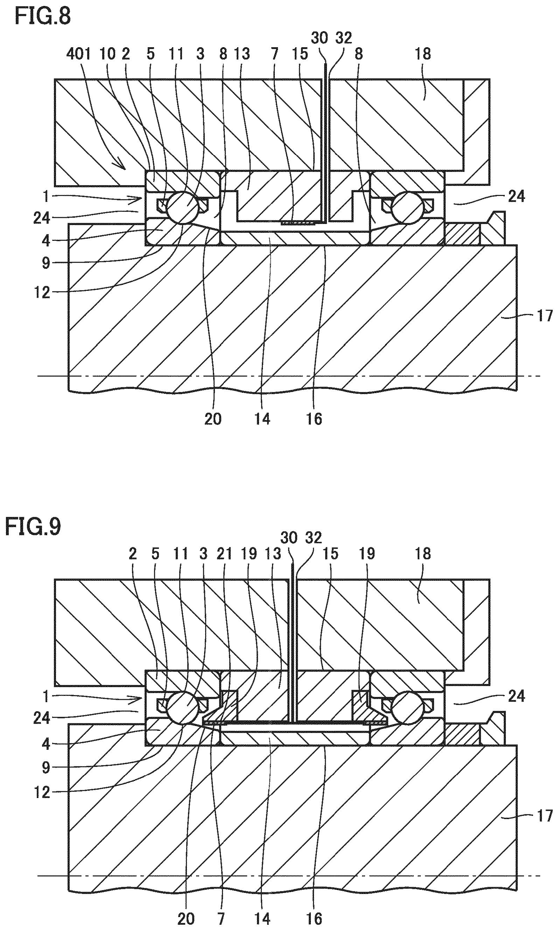

Fig. 8 shows an example in which the bearing device is incorporated in a main shaft 17 of a machine tool, and shows a state in which heat flux sensor 7 is attached to an outer ring spacer 13. That is, bearing device 401 according to the second embodiment includes: bearings 1; outer ring spacer 13; and heat flux sensor 7 that is disposed at outer ring spacer 13 and that detects a heat flux generated from each of bearings 1.

In Fig. 8, an inner ring spacer 14 and outer ring spacer 13 are inserted between two rolling bearings 1. Main shaft 17 is inserted into an inner diameter portion 9 of inner ring 4 and an inner ring spacer inner diameter portion 16, and an outer diameter portion 10 of outer ring 2 and an outer ring spacer outer diameter portion 15 are inserted into a housing 18, thus supporting rotation of main shaft 17. When main shaft 17 is rotated, bearing 1 generates heat due to contact between inner ring rolling element raceway surface 12 and rolling element 3 and contact between outer ring rolling element raceway surface 11 and rolling element 3. On this occasion, the temperature of inner ring 4 in which main shaft 17 is inserted tends to be higher than the temperature of outer ring 2 inserted in housing 18.

For example, regarding a temperature increase resulting from an increased surface pressure between rolling element 3 and raceway surface 11 of each bearing 1, there is a lag until heat generated between rolling element 3 and raceway surface 11 of bearing 1 is transferred to main shaft 17 or housing 18 that holds bearing 1 to increase the temperature of inner ring 4, outer ring 2, or spacers 13, 14, because housing 18 or main shaft 17 has a large heat capacity. Therefore, a sign of abnormality of the bearing is detected late if occurrence of abnormality of the bearing is detected by measuring a temperature of each component using a temperature sensor.

To address this, a difference between the temperature of outer ring 2 and the temperature of a rotation atmosphere 8 resulting from rotation of inner ring 4, rolling element 3, and cage 5 is detected by heat flux sensor 7. When a voltage output different from that in the stationary operation state is detected, an abnormality is determined. It should be noted that as an example, it has been illustratively described that the bearing device is inserted in the main shaft of the machine tool; however, in addition to the main shaft of the machine tool, a bearing device having the same structure can be applied to an industrial field or an automobile field.

Fig. 8 illustratively shows that heat flux sensor 7 is disposed at the center of outer ring spacer 13; however, heat flux sensors 7 may be disposed at positions close to inner rings 4. In this way, heat flux sensors 7 can be disposed close to inner rings 4, outer rings 2, contact portions of rolling elements 3, inner ring rolling element raceway surfaces 12, and outer ring rolling element raceway surfaces 11, which are heat generation portions. Accordingly, heat flows can be quickly detected.

Fig. 9 shows a modification in which heat flux sensors 7 are disposed at the positions close to inner rings 4. As shown in Fig. 9, protrusions 19 may be provided such that end portions of outer ring spacer 13 are close to inner ring outer diameter surfaces 20, and heat flux sensors 7 may be fixed to inner diameter surfaces 21 of protrusions 19.

The spacer includes: outer ring spacer 13 (main body portion); and protrusions 19 that protrude from a side surface of outer ring spacer 13 (main body portion) toward the outer diameter surfaces of inner rings 4. Heat flux sensors 7 are fixed to protrusions 19 to face the outer diameter surfaces of inner rings 4. Outer ring spacer 13 is adjacent to each outer ring 2 in the axial direction of bearing 1 and is disposed with a space being interposed between outer ring spacer 13 and inner ring spacer 14 in the radial direction of bearing 1.

In this case, heat flux sensors 7 directly face the respective inner ring outer diameter surfaces 20, thus improving precision of abnormality detection. In the example shown in Fig. 9, heat flux sensors 7 are provided at protrusions 19 at the left and right sides respectively; however, a heat flux sensor 7 may be provided at one of protrusions 19 at the left and right sides.

When heat flux sensor(s) 7 are provided at protrusion(s) 19 that protrude toward the inner ring(s) and that are provided at the spacer, the heat flux sensor(s) can be disposed near the heat generation portions, whereby an abnormality detection speed can be increased.

Moreover, a heat flux sensor 7 may be disposed in a vicinity 24 of a bearing side surface. In this way, the heat flux sensor can be provided even when there is no space for providing the heat flux sensor in the bearing or the spacer.

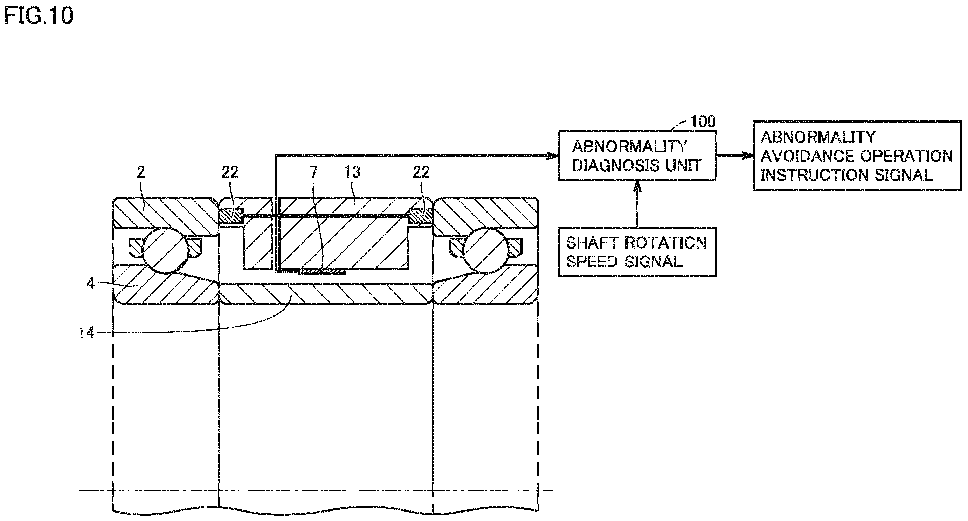

Fig. 10 shows a modification in which temperature sensors are added to the spacer. As shown in Fig. 10, temperature sensors 22 may be provided at outer ring spacer 13. Each of temperature sensors 22 may be provided in the vicinity of a contact between outer ring 2 and outer ring spacer 13.

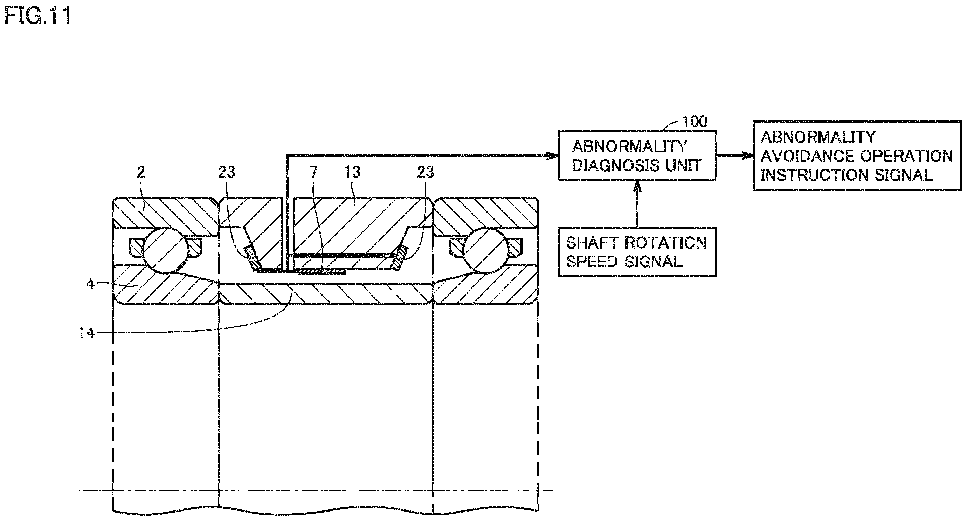

Fig. 11 shows a modification in which non-contact type temperature sensors are added to the spacer. As shown in Fig. 11, non-contact temperature sensors 23 may be provided at outer ring spacer 13, and a sign of an abnormality (seizing or the like) of each bearing may be determined by abnormality diagnosis unit 100 based on the output of heat flux sensor 7 and a result of measuring the temperature of inner ring 4 using each of non-contact temperature sensors 23 (for example, infrared temperature sensors).

Moreover, the temperature of the inner ring can be estimated based on the temperature of outer ring 2, the rotation speed of the rotation body such as the bearing, and the output of heat flux sensor 7. Based on the estimated temperature of the inner ring, the temperature of the outer ring, and the rotation speed, it is possible to estimate a bearing load applied to the bearing portion.

The following describes a method for estimating the bearing load. Considering an exemplary state in which the outer ring is inserted in the housing and the shaft is supported by the inner ring, a temperature is increased to cause expansion when the inner ring is rotated under application of a preload. Accordingly, the preload of the bearing is increased to be higher than an initial setting value. By preparing this relation by way of an arithmetic expression or the like, the preload can be estimated. Examples of parameters used for the arithmetic expression include the rotation speed of the bearing, the temperature of the outer ring, the temperature of the inner ring, the output of the heat flux sensor, and the like.

The output of the heat flux sensor does not represents a temperature of a measurement target itself; however, the heat flux sensor can detect a change in heat flow caused by a change in temperature of the measurement target. The heat flux sensor can be used as an alternative for a thermocouple or the like for detecting a temperature. For example, a preload estimation method described in Japanese Patent Laying-Open No. 2009-68533 (paragraph 0008) can be used.

As described above, in the second embodiment, heat flux sensor(s) 7 are disposed at the spacer. Accordingly, a sign of occurrence of abnormality in the bearing can be detected quickly without providing special processing to the bearing itself. In addition, by also providing the temperature sensor(s) at the bearing, the temperatures of the inner and outer rings of the bearing can be estimated based on the output(s) of the heat flux sensor(s), the rotation speed of the bearing (the rotation speed of the supporting portion), and the temperature(s) of the portion(s) to which the heat flux sensor(s) are adhered, whereby not only the occurrence of abnormality but also the load applied to the bearing device can be estimated.

### [Third Embodiment]

In each of the first and second embodiments, it has been illustrated that when the outer ring or the outer ring spacer is at the fixation side and the inner ring or the inner ring spacer is at the rotation side, the heat flux sensor is disposed at the outer ring or the outer ring spacer and the output of the sensor is drawn to outside via the wiring. Conversely, there may be a case where the outer ring or the outer ring spacer is at the rotation side and the inner ring or the inner ring spacer is at the fixation side. In a third embodiment, the following describes an exemplary case where the inner ring is at the fixation side.

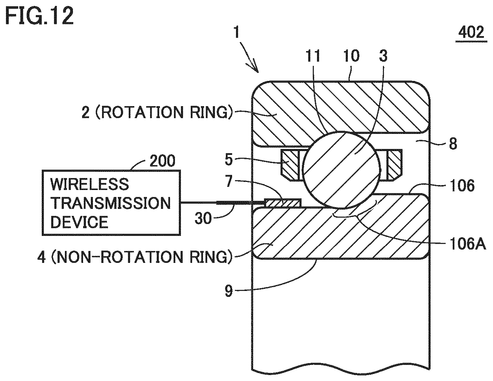

Fig. 12 shows a configuration of a bearing device 402 according to the third embodiment. The example shown in Fig. 12 represents a state in which heat flux sensor 7 is attached to inner ring 4 serving as a non-rotation ring when outer ring 2 serves as a rotation ring and inner ring 4 serves as the non-rotation ring.

Heat flux sensor 7 is disposed in the inside of bearing 1 in a width direction of bearing 1 at a portion of an outer diameter surface 106 of inner ring 4 other than a raceway surface 106A that is in abutment with rolling element 3.

As shown in Fig. 12, heat flux sensor 7 is adhered to inner ring 4. In the bearing device thus configured, outer ring 2 serves as the rotation ring and inner ring 4 serves as the non-rotation ring.

Since heat flux sensor 7 is adhered to the outer diameter side of the inner ring as shown in Fig. 12, measurement can be performed near a region at which heat is generated, whereby detection sensitivity and detection speed can be improved.

Moreover, even though a relation between the rotation ring and the non-rotation ring is opposite to that in Fig. 1, occurrence of abnormality in the bearing can be detected using an output from heat flux sensor 7 with the structure of Fig. 12 being applied. Information of the output generated in heat flux sensor 7 can be diagnosed in an external abnormality diagnosis device in the same manner by transmitting the information to outside using wireless transmission device 200. It should be noted that preferably, a power supply device for supplying electric power thereto may be further included. Examples of the power supply device usable herein include: a battery; a power generation device that generates power using a temperature difference, vibration, or the like; an electromagnetic induction type power generator; and the like.

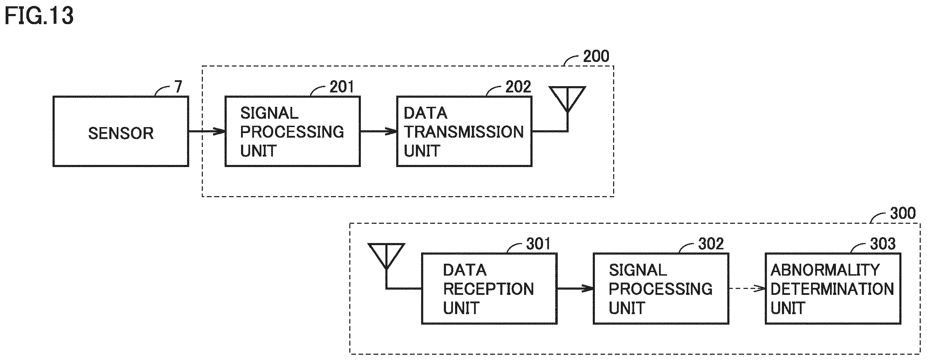

Fig. 13 shows a configuration for wirelessly transmitting and receiving an output of a sensor. As shown in Fig. 13, wireless transmission device 200 (Fig. 12) includes a signal processing unit 201 and a data transmission unit 202. Signal processing unit 201 receives the output of heat flux sensor 7, removes a noise component therefrom, performs an analog-to-digital conversion process, a modulation process, and the like, and outputs transmission data to data transmission unit 202. Data transmission unit 202 wirelessly transmits the data to reception device 300.

Reception device 300 is installed outside the machine tool. Reception device 300 includes: a data reception unit 301 that wirelessly receives data; a signal processing unit 302 that demodulates the data from the received signal; and an abnormality determination unit 303 that determines an abnormality in the bearing in response to the reception of the data from signal processing unit 302. When abnormality determination unit 303 is provided in a stage subsequent to signal processing unit 201, an amount of transmission data can be reduced, thus reducing power consumption. It should be noted that the determination process by abnormality determination unit 303 is the same as the process illustrated in each of Fig. 6 and Fig. 7 and therefore will not be described repeatedly.

The bearing device of the third embodiment includes: wireless transmission device 200 that wirelessly transmits the output information of heat flux sensor 7 to outside; and reception device 300 that receives the output information of heat flux sensor 7 from wireless transmission device 200 and that performs an abnormal determination for the bearing. Accordingly, also when the inner ring serves as the fixation ring and the outer ring serves as the rotation ring, the detection result of the heat flux sensor can be output to outside. Accordingly, a sign of abnormality of the bearing can be detected quickly as with the first and second embodiments.

### [Fourth Embodiment]

In a fourth embodiment, the following describes a case where the inner ring serves as the fixation ring as with the third embodiment. However, in a fourth embodiment, a configuration in which a heat flux sensor is disposed at the inner ring spacer instead of the inner ring will be described.

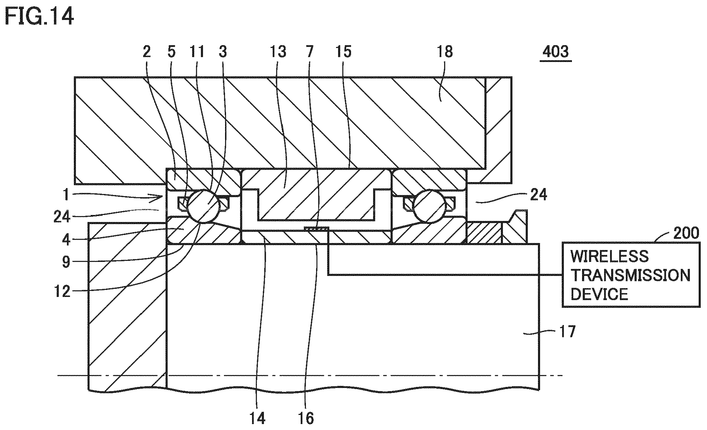

Fig. 14 shows a configuration of a bearing device 403 according to the fourth embodiment. The bearing device supports a rotation body using a structure in which a spacer is interposed between two bearings. The inner ring is at the non-rotation side. In the example shown in Fig. 14, heat flux sensor 7 is attached to the non-rotation side (for example, inner ring spacer 14) of the spacer.

That is, the bearing device according to the fourth embodiment further includes: a wireless transmission device 200 that is disposed at inner ring spacer 14 and that wirelessly transmits the output information of heat flux sensor 7 to outside; and a reception device 300 (Fig. 13) that receives the output information of heat flux sensor 7 from wireless transmission device 200 and that performs an abnormal determination for each bearing 1.

In the bearing device thus configured, outer ring 2 serves as the rotation ring and inner ring 4 serves as the non-rotation ring. Even though a relation between the rotation ring and the non-rotation ring is opposite to that in Fig. 8, occurrence of abnormality in bearing 1 can be detected using the output from heat flux sensor 7 with the structure of Fig. 14 being applied. Information of the output generated in heat flux sensor 7 can be diagnosed in an external abnormality diagnosis device in the same manner by transmitting the information to outside using wireless transmission device 200. It should be noted that preferably, a power supply device for supplying electric power thereto may be further included. Examples of the power supply device usable herein include: a battery; a power generation device that generates power using a temperature difference, vibration, or the like; an electromagnetic induction type power generator; and the like. It should be noted that wireless transmission device 200 has been described with reference to Fig. 13 and therefore will not be described repeatedly.

It should be noted that in addition to heat flux sensor 7, temperature sensor 22 may be attached to inner ring spacer 14 in order to measure the temperature in the vicinity of the inner ring.

According to the bearing device of the fourth embodiment, also when the inner ring serves as the fixation ring and the outer ring serves as the rotation ring, a detection result of the heat flux sensor can be output to outside. Accordingly, a sign of abnormality in the bearing can be detected quickly as with the first to third embodiments. Moreover, since no special processing is required for the bearing itself, as with the second embodiment, the spacer and the heat flux sensor can be used continuously even when the bearing is replaced due to deterioration with age or the like.

### [Fifth Embodiment]

A bearing device 404 according to a fifth embodiment includes basically the same configuration as that of bearing device 401 according to the second embodiment, and outer ring 2 is configured as the fixation ring. However, the bearing device according to the fifth embodiment differs from the bearing device according to the second embodiment in that the bearing device further includes supply paths for supplying lubrication fluid to bearings 1 and an arrangement of heat flux sensors 7 in the circumferential direction of the bearing device is restricted based on an arrangement of the supply paths. The lubrication fluid includes lubrication oil. For example, the lubrication fluid includes lubrication oil and air.

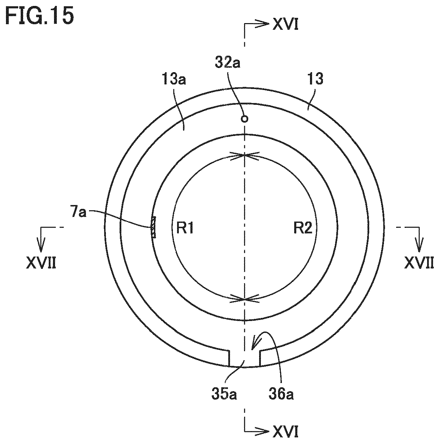

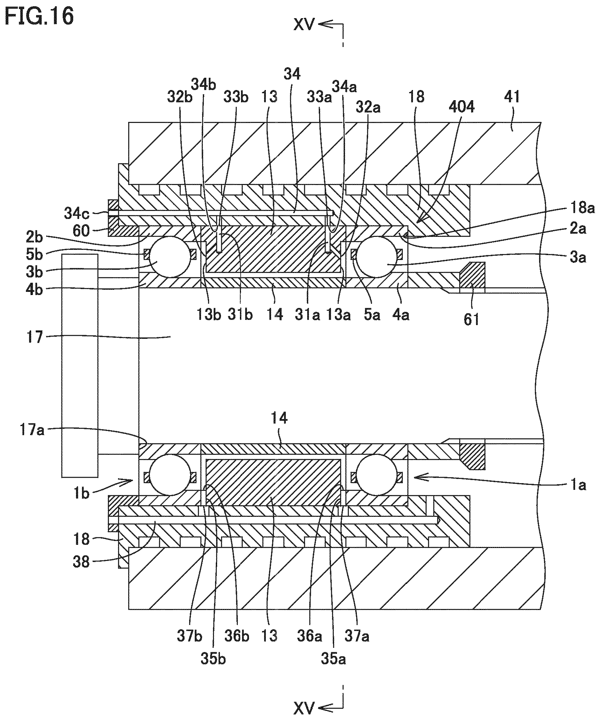

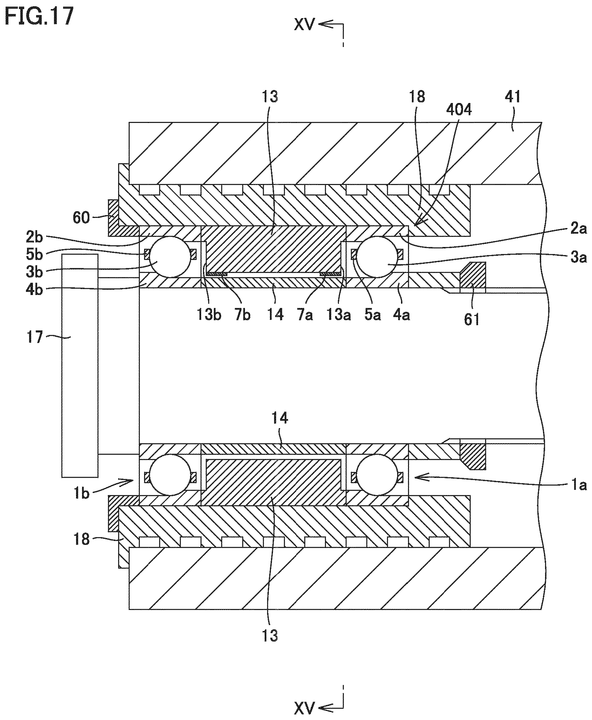

As an exemplary configuration of the bearing device according to the fifth embodiment, each of Fig. 15 to Fig. 17 shows a bearing device in which: a first bearing 1a and a second bearing 1b are disposed to interpose outer ring spacer 13 and inner ring spacer 14 in the axial direction; and a first heat flux sensor 7a for detecting a heat flux generated from first bearing 1a and a second heat flux sensor 7b for detecting a heat flux generated from second bearing 1b are disposed. It should be noted that in Fig. 15, inner ring spacer 14, main shaft 17, housing 18, and an outer casing 41 are not illustrated. Moreover, in each of Fig. 16 and Fig. 17, main shaft 17 is not seen in a cross section. Each of first bearing 1a and second bearing 1b is an angular contact ball bearing, for example. First bearing 1a and second bearing 1b may be combined in an appropriately selected manner, but is combined in a back-to-back manner, for example. First bearing 1a and second bearing 1b have configurations equivalent to each other, for example.

As shown in Fig. 15 to Fig. 17, as the supply paths, the bearing device according to the fifth embodiment includes: a first supply path 31a for supplying lubrication fluid to an inner space of first bearing 1a; and a second supply path 31b for supplying lubrication fluid to an inner space of second bearing 1b. First supply path 31a and second supply path 31b are connected, via an external supply path 34 disposed external to the bearing device, to a lubrication fluid supply device (not shown) disposed external to the bearing device.

First supply path 31a is provided with: a first supply opening 32a disposed to face the inner space of first bearing 1a; and a first inflow opening 33a connected to external supply path 34. First supply path 31a and second supply path 31b are disposed inside outer ring spacer 13, for example. For example, first supply opening 32a is disposed in end surface 13a of outer ring spacer 13 in the axial direction. A first inflow opening 33a is disposed in the outer diameter surface of outer ring spacer 13, for example. Second supply path 31b is provided with: a second supply opening 32b disposed to face the inner space of second bearing 1b; and a second inflow opening 33b connected to external supply path 34. For example, second supply opening 32b is disposed in end surface 13b of outer ring spacer 13 in the axial direction. A second inflow opening 33b is disposed in the outer diameter surface of outer ring spacer 13, for example. End surface 13a and end surface 13b of outer ring spacer 13 in the axial direction have configurations equivalent to each other, for example.

External supply path 34 is disposed inside housing 18, for example. External supply path 34 is provided with: a branch portion; a third outflow opening 34a and a fourth outflow opening 34b each located at the downstream side relative to the branch portion in the flow direction of the lubrication fluid; and a third inflow opening 34c located at the upstream side relative to the branch portion in the flow direction. Third outflow opening 34a is connected to first inflow opening 33a. Fourth outflow opening 34b is connected to second inflow opening 33b. Third outflow opening 34a and fourth outflow opening 34b are disposed in the inner diameter surface of housing 18 connected to the outer diameter surface of outer ring spacer 13, for example. Third inflow opening 34c is connected to the lubrication fluid supply device via a pipe (not shown) or the like. For example, third inflow opening 34c is provided in a front cover 60 connected to the end surface of housing 18 in the axial direction.

As shown in Fig. 15 to Fig. 17, the bearing device according to the fifth embodiment includes discharge paths for discharging the lubrication fluid in the inner spaces of bearings 1. Specifically, as the discharge paths, the bearing device according to the fifth embodiment includes: a first discharge path 35a for discharging the lubrication fluid from the inner space of first bearing 1a; and a second discharge path 35b for supplying the lubrication fluid to the inner space of second bearing 1b. First discharge path 35a and second discharge path 35b are connected, via an external discharge path 38 disposed external to the bearing device, to a lubrication fluid discharging device (not shown) disposed external to the bearing device.

First discharge path 35a is provided with: a first discharge opening 36a disposed to face the inner space of first bearing 1a; and a fifth outflow opening 37a connected to external discharge path 38. First discharge path 35a is disposed between outer ring 2a of first bearing 1a and outer ring spacer 13, for example. A connection surface of outer ring spacer 13 in contact with the end surface of outer ring 2a in the axial direction is provided with a groove portion continuous to end surface 13a. For example, first discharge path 35a is defined by the end surface of outer ring 2a and the inner circumferential surface of the groove portion formed in outer ring spacer 13.

Second discharge path 35b is provided with: a second discharge opening 36b disposed to face the inner space of second bearing 1b; and a sixth outflow opening 37b connected to external discharge path 38. Second discharge path 35b is disposed between outer ring 2b of second bearing 1b and outer ring spacer 13, for example. A connection surface of outer ring spacer 13 in contact with the end surface of outer ring 2b in the axial direction is provided with a groove portion continuous to end surface 13b. For example, second discharge path 35b is defined by the end surface of outer ring 2b and the inner circumferential surface of the groove portion formed in outer ring spacer 13.

As shown in Fig. 15, when the bearing device is seen in the axial direction, first discharge opening 36a is disposed with a space being interposed between first discharge opening 36a and first supply opening 32a in the circumferential direction. When the bearing device is seen in the axial direction, a central angle formed by each center of first supply opening 32a and first discharge opening 36a with respect to the center axis of the bearing device is 180°, for example. When the bearing device is seen in the axial direction, second discharge opening 36b is disposed with a space being interposed between second discharge opening 36b and second supply opening 32b in the circumferential direction. When the bearing device is seen in the axial direction, a central angle formed by each center of second supply opening 32b and second discharge opening 36b with respect to the center axis of the bearing device is 180°, for example.

In the bearing device according to the fifth embodiment, there are formed: a first flow path in which first supply path 31a, first supply opening 32a, the inner space of first bearing 1a, first discharge opening 36a, and first discharge path 35a are connected to one another in this order; and a second flow path in which second supply path 31b, second supply opening 32b, the inner space of second bearing 1b, second discharge opening 36b, and second discharge path 35b are connected to one another in this order. The first flow path and the second flow path have equivalent configurations, for example.

Since the inner space of first bearing 1a is provided to be annular, a first branch path and a second branch path are formed in the inner space to connect between first supply opening 32a and first discharge opening 36a. That is, the first flow path is branched and merged between first supply opening 32a and first discharge opening 36a.

Since the inner space of second bearing 1b is provided to be annular, a third branch path and a fourth branch path are formed in the inner space to connect between second supply opening 32b and second discharge opening 36b. That is, the second flow path is branched and merged between second supply opening 32b and second discharge opening 36b.

For example, first heat flux sensor 7a and second heat flux sensor 7b are fixed to a surface of outer ring spacer 13 facing inner ring spacer 14. Outer ring spacer 13 serves as a fixation side spacer, and inner ring spacer 14 serves as a rotation side spacer. Each of first heat flux sensor 7a and second heat flux sensor 7b is disposed to detect a heat flux extending along the radial direction between outer ring spacer 13 and corresponding inner ring spacer 14. First heat flux sensor 7a and second heat flux sensor 7b may be fixed to the fixation side spacer by any method, such as adhesion or screw fastening. A relative positional relation between first heat flux sensor 7a and the first flow path is equivalent to a relative positional relation between second heat flux sensor 7b and the second flow path, for example.

As shown in Fig. 15, when the bearing device is seen in the axial direction, first heat flux sensor 7a is disposed with a space being interposed between first heat flux sensor 7a and each of first supply opening 32a and first discharge opening 36a in the circumferential direction. When the bearing device is seen in the axial direction, first heat flux sensor 7a is disposed between first supply opening 32a and first discharge opening 36a. That is, first heat flux sensor 7a is disposed adjacent to the first branch path or the second branch path. Preferably, when the bearing device is seen in the axial direction, first heat flux sensor 7a is disposed substantially at the center between first supply opening 32a and first discharge opening 36a in the circumferential direction. From a different viewpoint, it can be said that first heat flux sensor 7a is preferably disposed adjacent to a region furthest away from first supply opening 32a and first discharge opening 36a in the first branch path or the second branch path. Preferably, the central angle of each center of first heat flux sensor 7a and first supply opening 32a with respect to the center axis is more than or equal to 80° and less than or equal to 100°, and the central angle of each center of first heat flux sensor 7a and first discharge opening 36a with respect to the center axis is more than or equal to 80° and less than or equal to 100°.

When the bearing device is seen in the axial direction, second heat flux sensor 7b is disposed with a space being interposed between second heat flux sensor 7b and each of second supply opening 32b and second discharge opening 36b in the circumferential direction. When the bearing device is seen in the axial direction, second heat flux sensor 7b is disposed between second supply opening 32b and second discharge opening 36b. That is, second heat flux sensor 7b is disposed adjacent to the third branch path or the fourth branch path. Preferably, when the bearing device is seen in the axial direction, second heat flux sensor 7b is disposed substantially at the center between second supply opening 32b and second discharge opening 36b in the circumferential direction. From a different viewpoint, it can be said that second heat flux sensor 7b is preferably disposed adjacent to a region furthest away from second supply opening 32b and second discharge opening 36b in the third branch path or the fourth branch path. Preferably, the central angle of each center of second heat flux sensor 7b and second supply opening 32b with respect to the center axis is more than or equal to 80° and less than or equal to 100°, and the central angle of each center of second heat flux sensor 7b and second discharge opening 36b with respect to the center axis is more than or equal to 80° and less than or equal to 100°.

As shown in Fig. 17, first heat flux sensor 7a is disposed on the inner diameter surface of outer ring spacer 13 at a region adjacent to inner ring 4a of first bearing 1a. Second heat flux sensor 7b is disposed on the inner diameter surface of outer ring spacer 13 at a region adjacent to inner ring 4b of second bearing 1b.

First supply opening 32a is disposed to overlap with second supply opening 32b in the axial direction, for example. First discharge opening 36a is disposed to overlap with second discharge opening 36b in the axial direction, for example. In this case, when the bearing device is seen in the axial direction, first heat flux sensor 7a is disposed with a space being interposed between first heat flux sensor 7a and each of second supply opening 32b and second discharge opening 36b in the circumferential direction. When the bearing device is seen in the axial direction, second heat flux sensor 7b is disposed with a space being interposed between second heat flux sensor 7b and each of first supply opening 32a and first discharge opening 36a in the circumferential direction. First heat flux sensor 7a and second heat flux sensor 7b are disposed to overlap with each other in the axial direction, for example. When the bearing device is seen in the axial direction, first heat flux sensor 7a and second heat flux sensor 7b are disposed on a region R1 or region R2 of outer ring spacer 13 located between first supply opening 32a and first discharge opening 36a and between second supply opening 32b and second discharge opening 36b in the circumferential direction.

In the bearing device according to the fifth embodiment, when the bearing device is seen in the axial direction, first heat flux sensor 7a is disposed with a space being interposed between first heat flux sensor 7a and each of first supply opening 32a and first discharge opening 36a in the circumferential direction. Such a first heat flux sensor 7a can be disposed at the region adjacent to first bearing 1a in the axial direction and can be disposed to be separated from a merged portion of the first and second branch paths at which a comparatively large amount of the lubrication fluid flows in the first flow path and the second flow path, i.e., can be disposed to be separated from the region adjacent to first supply opening 32a and first discharge opening 36a in the axial direction. Specifically, first heat flux sensor 7a can be disposed adjacent to the first branch path in which a comparatively small amount of the lubrication fluid flows in the first flow path. Accordingly, first heat flux sensor 7a can detect a change of the heat flux generated from first bearing 1a at a high speed with high precision. This is due to the following reason.

A change in heat flux generated in the bearing device is caused by a change in balance among heat generation and cooling effects within the bearing device, a heat radiation effect to the outside of the bearing device, and the like. In order for first heat flux sensor 7a to detect, at a high speed with high precision, a change in heat flux caused by a change in heat generation effect within first bearing 1a, first heat flux sensor 7a is preferably disposed near first bearing 1a. On the other hand, a region closer to first bearing 1a is affected more greatly by the cooling effect provided by the lubrication fluid flowing through the inner space of first bearing 1a. Further, a region closer to first supply opening 32a or first discharge opening 36a in which an amount of flow of the lubrication fluid is relatively large is affected more greatly by the cooling effect provided by the lubrication fluid. Therefore, for example, when first heat flux sensor 7a is disposed near first supply opening 32a or first discharge opening 36a, it is concerned that first heat flux sensor 7a cannot detect, at a high speed with high precision, a change in heat flux caused by the change in heat generation effect within first bearing 1a.

On the other hand, first heat flux sensor 7a disposed with a space being interposed between first heat flux sensor 7a and each of first supply opening 32a and first discharge opening 36a in the circumferential direction is disposed to be separated from the merged portion, and is therefore less likely to be affected by the cooling effect provided by the lubrication fluid even when first heat flux sensor 7a is disposed near first bearing 1a, whereby the change in heat flux caused by the change in heat generation effect can be detected at a high speed with high precision.

Second heat flux sensor 7b can exhibit the same effect as that of first heat flux sensor 7a due to the same reason as that for first heat flux sensor 7a described above.

It should be noted that first supply opening 32a may be disposed not to overlap with second supply opening 32b in the axial direction, for example. In this case, first heat flux sensor 7a may be disposed to overlap with second supply opening 32b in the axial direction as long as first heat flux sensor 7a is disposed with a space being interposed between first heat flux sensor 7a and each of first supply opening 32a and first discharge opening 36a in the circumferential direction when the bearing device is seen in the axial direction. First discharge opening 36a is disposed not to overlap with second discharge opening 36b in the axial direction, for example. In this case, first heat flux sensor 7a may be disposed to overlap with second supply opening 32b or second discharge opening 36b in the axial direction as long as first heat flux sensor 7a is disposed with a space being interposed between first heat flux sensor 7a and each of first supply opening 32a and first discharge opening 36a in the circumferential direction when the bearing device is seen in the axial direction. Second heat flux sensor 7b may be disposed to overlap with first supply opening 32a or first discharge opening 36a in the axial direction as long as second heat flux sensor 7b is disposed with a space being interposed between second heat flux sensor 7b and each of second supply opening 32b and second discharge opening 36b in the circumferential direction when the bearing device is seen in the axial direction.

Moreover, the lubrication fluid discharge device may be configured in one piece with the lubrication fluid supply device. Each of the supply paths and the discharge paths may be configured as a part of a circulation path for circulating the lubrication fluid.

A preload is applied to each of first bearing 1a and second bearing 1b in the axial direction. Housing 18 protrudes inwardly with respect to the inner diameter surface that is in contact with the outer diameter surface of outer ring 2a of first bearing 1a, and has an end surface 18a that is in contact with the end surface of outer ring 2a in the axial direction. Main shaft 17 protrudes outwardly with respect to the outer diameter surface that is in contact with the inner diameter surface of inner ring 4b of second bearing 1b, and has an end surface 17a that is in contact with the end surface of inner ring 4b in the axial direction. End surface 17a of main shaft 17 and end surface 18a of housing 18 are provided to be oriented in directions to face each other. Outer ring 2a of first bearing 1a, outer ring spacer 13, and outer ring 2b of second bearing 1b are interposed between end surface 18a of housing 18 and front cover 60. Inner ring 4a of first bearing 1a, inner ring spacer 14, and inner ring 4b of second bearing 1b are interposed between a nut 61 and end surface 17a of main shaft 17. The preload applied to each of first bearing 1a and second bearing 1b is determined by a difference between a width between end surface 18a and front cover 60 in the axial direction and a width between end surface 17a and nut 61 in the axial direction. The difference from the width between end surface 17a and nut 61 in the axial direction is changed according to an amount of fastening of nut 61.

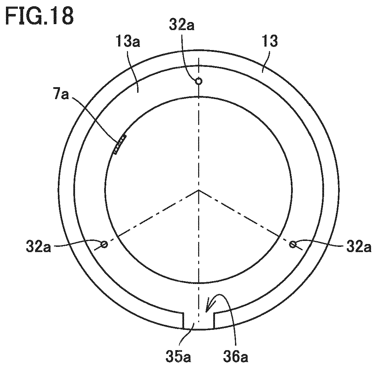

As shown in Fig. 18, first supply path 31a of the bearing device according to the fifth embodiment may be provided with a plurality (for example, three) of first supply openings 32a for supplying the lubrication oil to the inner space of one bearing. The plurality of first supply openings 32a are disposed with a space being interposed therebetween in the circumferential direction, and are disposed with a space being interposed between each first supply opening 32a and first discharge opening 36a in the circumferential direction. For example, the plurality of first supply openings 32a are disposed with equal intervals in the circumferential direction, and first discharge opening 36a is disposed at the center between two first supply openings 32a adjacent to each other in the circumferential direction. In the circumferential direction, first heat flux sensor 7a is disposed between a different pair of first supply openings 32a from a pair of first supply openings 32a adjacent to each other with first discharge opening 36a being interposed therebetween. Also in this way, first heat flux sensor 7a is disposed with a space being interposed between first heat flux sensor 7a and each of the plurality of first supply openings 32a and first discharge opening 36a in the circumferential direction.

Hence, even when first heat flux sensor 7a is disposed near first bearing 1a, first heat flux sensor 7a is less likely to be affected by the cooling effect provided by the lubrication fluid, whereby the change in heat flux caused by the change in heat generation effect can be detected at a high speed with high precision. It should be noted that second supply path 31b may have the same configuration as that of first supply path 31a.

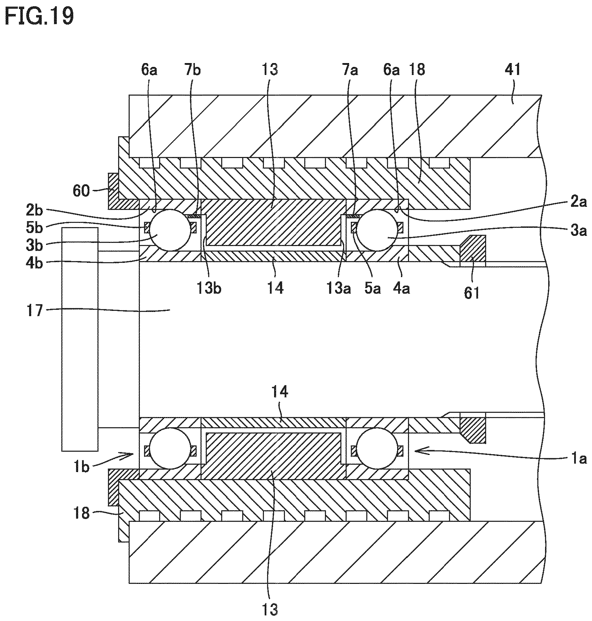

As shown in Fig. 19, as with heat flux sensor 7 of the bearing device shown in Fig. 1, heat flux sensor 7 of the bearing device according to the fifth embodiment may be disposed on inner diameter surface 6 of outer ring 2 at a portion other than raceway surface 6A (see Fig. 1) that is in abutment with rolling element 3. Also, when the bearing device is seen in the axial direction, such a heat flux sensor 7 is disposed with a space being interposed between heat flux sensor 7 and each of supply opening 32 and discharge opening 36 in the circumferential direction. Accordingly, even when heat flux sensor 7 is disposed near bearing 1, heat flux sensor 7 is less likely affected by the cooling effect provided by the lubrication fluid, whereby the change in heat flux caused by the change in heat generation effect can be detected at a high speed with high precision.

It should be noted that in each of the above-described first to fifth embodiments, the heat flux sensor was provided at the non-rotation side of the bearing or spacer; however, the heat flux sensor may be provided at the rotation side.

Moreover, in each of the above-described first to fifth embodiments, in order to avoid the detection precision for the heat flux from being deteriorated due to the lubrication oil being adhered onto the surface of heat flux sensor 7, an oil-repelling process may be provided to a surface which faces heat flux sensor 7 and via which the rotation atmosphere temperature is measured.

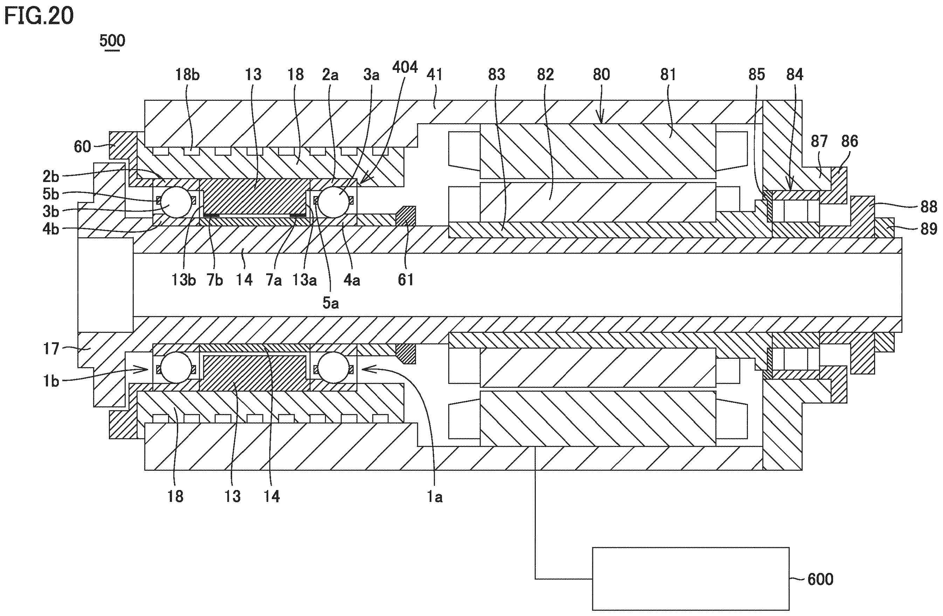

A device to which the bearing device according to each of the first to fifth embodiments is applied is not particularly limited. For example, the bearing device can be applied to a built-in motor type spindle device of a machine tool. Fig. 20 shows a spindle device 500 including bearing device 404 according to the fifth embodiment. As shown in Fig. 20, spindle device 500 mainly includes the bearing device according to the fifth embodiment, a main shaft 17, a housing 18, a motor 80, a bearing 84, and an outer case 41, for example. Main shaft 17 and housing 18 includes the basically same configurations as those shown in Fig. 8. Main shaft 17 is rotatably supported by bearings 1 of the bearing device and bearing 84. The axial direction of bearing 84 is along the above-described axial direction. Each of first bearing 1a and second bearing 1b and bearing 84 are disposed to interpose motor 80 therebetween in the axial direction. Each of first bearing 1a and second bearing 1b is an angular contact ball bearing, for example. Bearing 84 is a cylindrical roller bearing, for example. Each of first bearing 1a and second bearing 1b supports a radial load and an axial load, which act on main shaft 17. Bearing 84 supports a radial load that acts on main shaft 17.

Housing 18 is fixed to outer case 41. The outer diameter surface of housing 18 is in contact with the inner diameter surface of outer case 41. A stator 81 of motor 80 is fixed to outer case 41. The outer diameter surface of stator 81 is in contact with the inner diameter surface of outer case 41. A rotor 82 of motor 80 is fixed to main shaft 17. Rotor 82 is fixed to main shaft 17 with a cylinder member 83 being interposed therebetween, for example. Cylinder member 83 is provided to be annular, and main shaft 17 is inserted therein.

The outer ring of bearing 84 is interposed between a positioning member 85 fixed to cylinder member 83 and an outer ring presser 86 in the axial direction. Outer ring presser 86 is fixed to an end member 87. The outer ring of bearing 84 is disposed at an internal side relative to end member 87 in the radial direction, and is provided to slide relative to outer ring presser 86 and end member 87 in accordance with expansion and contraction of main shaft 17 in the axial direction. End member 87 is fixed to outer case 41.

The inner ring of bearing 84 is inserted between cylinder member 83 and inner ring presser 88 in the axial direction. Cylinder member 83, the inner ring of bearing 84, and inner ring presser 88 are positioned by main shaft 17 and nut 89 in the axial direction. Positioning member 85, outer ring presser 86, end member 87, inner ring presser 88, and nut 89 are provided to be annular, and main shaft 17 is inserted therein.

The spindle device is provided with a cooling unit for cooling the bearing device. The cooling unit is disposed external to the bearing device. The cooling unit includes a flow passage in which coolant flows, for example. The flow passage is provided as a space defined by the inner diameter surface of outer case 41 and a spiral groove 18b formed in the outer diameter surface of housing 18, for example. The cooling unit cools the bearing device by allowing the coolant to flow in groove 18b in a use state of the spindle device. First heat flux sensor 7a and second heat flux sensor 7b are disposed close to first bearing 1a and second bearing 1b relative to the cooling unit. The spindle device is provided with a motor cooling unit for cooling motor 80, but the motor cooling unit is not shown here.

Since such a spindle device includes the above-described bearing device, changes in heat fluxes generated from first bearing 1a and second bearing 1b can be detected by first heat flux sensor 7a and second heat flux sensor 7b at a higher speed with higher precision than those in a spindle device in which a heat flux sensor is disposed external to its housing.

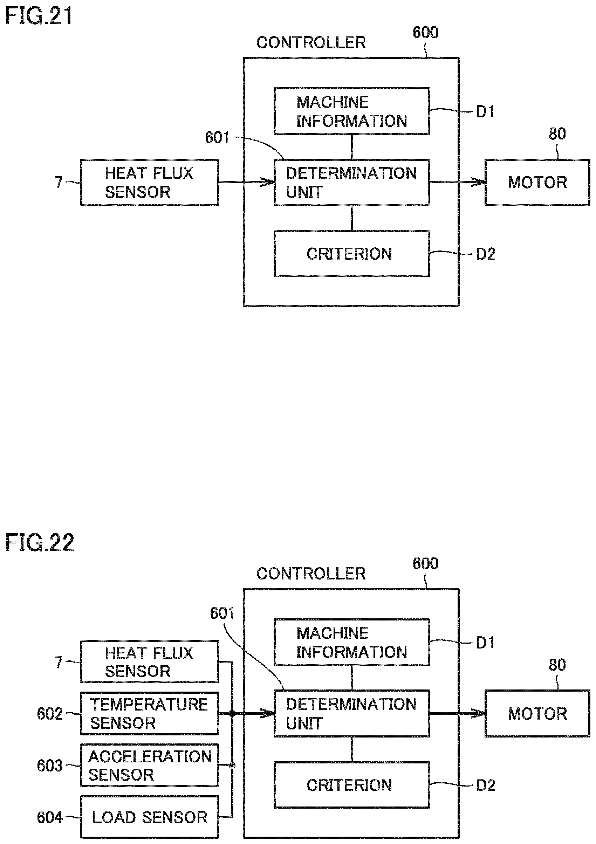

As shown in Fig. 21, in the spindle device, a controller 600 for controlling an operation of the spindle device may diagnose an abnormality of bearing 1 based on an output of heat flux sensor 7. Controller 600 includes a determination unit 601. Determination unit 601 determines presence/absence of abnormality of bearing 1 based on an output of heat flux sensor 7, a rotation speed of motor 80 of the spindle device, machine information D1 such as a lubrication condition and a cooling condition, and a criterion D2 determined in advance in order to determine presence/absence of abnormality of bearing 1. It should be noted that an abnormality of bearing 1 is occurrence or possibility of occurrence of seizing of bearing 1, for example. In this case, the above-described transmission unit of the bearing device is provided to transmit the output of heat flux sensor 7 to determination unit 601 of controller 600. Controller 600 is provided to change at least one of the rotation speed of motor 80, the lubrication condition, and the cooling condition based on a result of determination by determination unit 601. It should be noted that determination unit 601 may determine presence/absence of abnormality of bearing 1 at least based on the output of heat flux sensor 7 and criterion D2 determined in advance in order to determine presence/absence of abnormality of bearing 1.

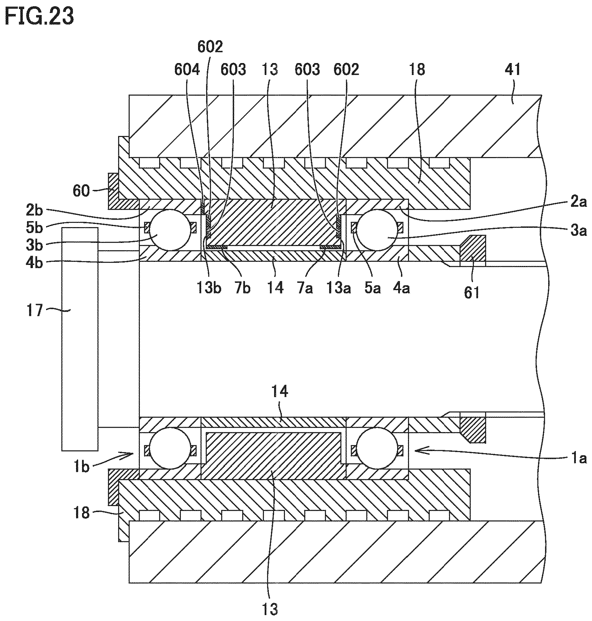

Moreover, as with the above-described abnormality diagnosis unit, determination unit 601 can also diagnose an abnormality of bearing 1 based on each output of heat flux sensor 7 and other sensors. As shown in Fig. 22, determination unit 601 diagnoses an abnormality of bearing 1 based on the outputs of heat flux sensor 7, temperature sensor 602, acceleration sensor 603, and load sensor 604, for example. For example, temperature sensor 602 is provided to detect a temperature increase of outer ring spacer 13 caused by insufficient lubrication of first bearing 1a and second bearing 1b. As shown in Fig. 23, temperature sensor 602 is provided at each end surface of outer ring spacer 13 so as to face each of first bearing 1a and second bearing 1b in the axial direction, for example. For example, acceleration sensor 603 is provided to detect vibration of main shaft 17 in at least one of the axial direction and the radial direction. The vibration of main shaft 17 is caused by flaking of each raceway surface of first bearing 1a and second bearing 1b. As shown in Fig. 23, acceleration sensor 603 is disposed side by side with temperature sensor 602 at each end surface of outer ring spacer 13 facing each of first bearing 1a and second bearing 1b in the axial direction, for example. For example, load sensor 604 is provided to detect a change in preload applied to each of first bearing 1a and second bearing 1b in the axial direction. As shown in Fig. 23, load sensor 604 is disposed to connect between outer ring 2b of second bearing 1b and outer ring spacer 13 in the axial direction, for example. Load sensor 604 is, for example, a thin film sensor and has an electric resistance that is changed according to a pressure.

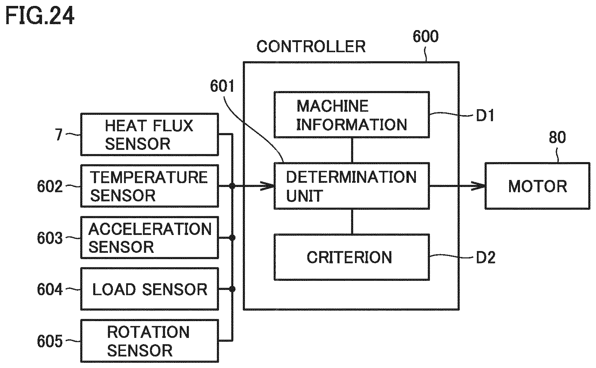

Moreover, determination unit 601 may be provided to diagnose an abnormality of bearing 1 based on the rotation speed of motor 80 in addition to each output of heat flux sensor 7, temperature sensor 602, acceleration sensor 603, and load sensor 604. Determination unit 601 may be provided to obtain the rotation speed of motor 80 as a rotation sensor signal output from motor 80. Alternatively, as shown in Fig. 24, determination unit 601 may be provided to obtain the rotation speed of motor 80 as a rotation speed measured by a magnetic ring (not shown) fixed to inner ring spacer 14 and a rotation sensor (magnetic sensor) 605 fixed to outer ring spacer 13.

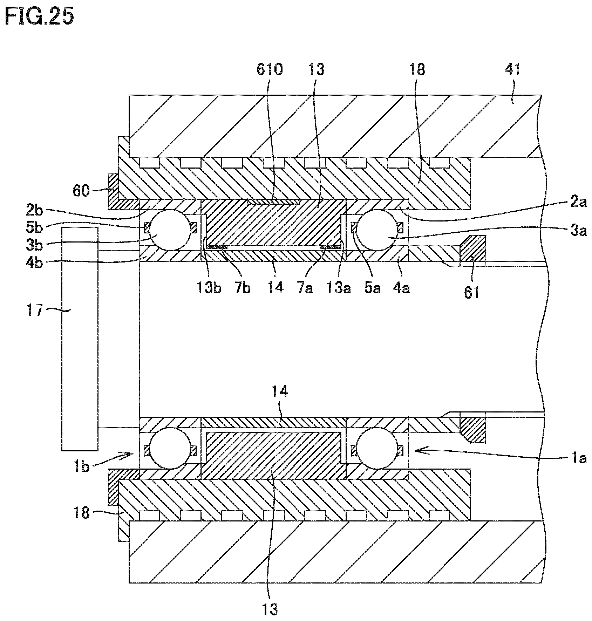

Also in the above-described spindle device, the abnormality diagnosis unit can diagnose an abnormality of bearing 1. The abnormality diagnosis unit may be disposed at outer ring spacer 13, for example. Specifically, as shown in Fig. 25, the abnormality diagnosis unit may be mounted on a substrate 610 disposed at the outer diameter surface of outer ring spacer 13. A distance between such an abnormality diagnosis unit and heat flux sensor 7 is shorter than a distance between heat flux sensor 7 and an abnormality diagnosis unit disposed external to the bearing device, particularly, disposed external to the spindle device. Accordingly, the abnormality diagnosis unit disposed at outer ring spacer 13 can determine presence/absence of abnormality based on an output signal less affected by noise than an output signal of heat flux sensor 7 obtained by the abnormality diagnosis unit disposed external to the bearing device.

The embodiments disclosed herein are illustrative and non-restrictive in any respect. The scope of the present invention is defined by the terms of the appended claims.

### REFERENCE SIGNS LIST

1: bearing; 2: outer ring; 3: rolling element; 4: inner ring; 5: cage; 6, 21: inner diameter surface; 6A, 11, 12, 106A: raceway surface; 7: heat flux sensor; 8: rotation atmosphere; 9: inner diameter portion; 10: outer diameter portion; 13: outer ring spacer; 14: inner ring spacer; 15: outer ring spacer outer diameter portion; 16: inner ring spacer inner diameter portion; 17: main shaft; 18: housing; 19: protrusion; 20: inner ring outer diameter surface; 22: temperature sensor; 23: non-contact temperature sensor; 30: wiring; 80: drive motor; 100: abnormality diagnosis unit; 106: outer diameter surface; 200: wireless transmission device; 201, 302: signal processing unit; 202: data transmission unit; 300: reception device; 301: data reception unit; 303: abnormality determination unit.

## Claims

1. A bearing device (401, 404) for supporting a rotation body using a single bearing (1) or a structure with a plurality of bearings (1) and a spacer,
the single bearing (1) or each of the plurality of bearings (1) including an inner ring (4) and an outer ring (2),
**characterized in that**, the bearing device comprising a heat flux sensor (7) that is disposed at the inner ring (4), the outer ring (2), or the spacer, and that detects a heat flux, wherein
the heat flux sensor (7) is disposed at the radially inner side of the outer ring (2),
the spacer includes an outer ring spacer (13) and an inner ring spacer (14), and
the outer ring spacer (13) is a non-rotation side spacer,
the outer ring spacer (13) includes
a main body portion adjacent to the outer ring (2) in an axial direction of the single bearing (1) or each of the plurality of bearings (1), the main body portion being disposed with a space being interposed between the main body portion and the inner ring spacer (14) in a radial direction of the single bearing (1) or each of the plurality of bearings (1), and
a protrusion (19) that protrudes from a side surface of the main body portion toward an outer diameter surface of the inner ring (4), and
the heat flux sensor (7) is fixed to the protrusion (19) to face the outer diameter surface of the inner ring (4).

2. The bearing device (401, 404) according to claim 1, further comprising an abnormality diagnosis unit (100) that diagnoses an abnormality of the single bearing (1) or each of the plurality of bearings (1) based on an output of the heat flux sensor (7).

3. The bearing device (401, 404) according to claim 2, further comprising a temperature sensor (22) disposed in addition to the heat flux sensor (7), wherein the output of the heat flux sensor (7) and an output of the temperature sensor (22) are transmitted to the abnormality diagnosis unit (100), and the abnormality diagnosis unit (100) diagnoses the abnormality of the single bearing (1) or each of the plurality of bearings (1) based on the output of the heat flux sensor (7), the output of the temperature sensor (22), and a rotation speed signal.

4. The bearing device (404) according to any one of claims 1 to 3, further comprising a supply path (31a, 31b) that supplies lubrication fluid to an inner space of the single bearing (1) or each of the plurality of bearings (1) between the inner ring (4) and the outer ring (2), wherein
the supply path (31a, 31b) is provided with at least one supply opening disposed to face the inner space, and
when the bearing device (404) is seen in an axial direction of the single bearing (1) or each of the plurality of bearings (1), the heat flux sensor (7) is disposed with a space being interposed between the heat flux sensor (7) and the at least one supply opening in a circumferential direction of the single bearing (1) or each of the plurality of bearings (1).

5. The bearing device (404) according to claim 4, wherein
the supply path (31a, 31b) is provided with a plurality of supply openings (32a, 32b) each disposed to face the inner space,
the plurality of supply openings (32a, 32b) are disposed with a space being interposed between the plurality of supply openings (32a, 32b) in the circumferential direction, and
when the bearing device (404) is seen in the axial direction, the heat flux sensor (7) is disposed at a center between two adjacent supply openings of the plurality of supply openings (32a, 32b) in the circumferential direction.

6. The bearing device (404) according to claim 4 or 5, further comprising a discharge path (35a, 35b) that discharges the lubrication fluid from the inner space of the single bearing (1) or each of the plurality of bearings (1) between the inner ring (4) and the outer ring (2), wherein
the discharge path (35a, 35b) is provided with at least one discharge opening (36a, 36b) disposed to face the inner space,
when the bearing device (404) is seen in the axial direction, the at least one discharge opening (36a, 36b) is disposed with a space being interposed between the at least one discharge opening (36a, 36b) and the at least one supply opening in the circumferential direction, and
when the bearing device (404) is seen in the axial direction, the heat flux sensor (7) is disposed with a space being interposed between the heat flux sensor (7) and the at least one discharge opening (36a, 36b) in the circumferential direction.

7. A spindle device (500) comprising:
the bearing device recited in any one of claims 1 to 6; and
a housing (18) that supports the bearing device (400, 401, 402, 403, 404).

## Patentansprüche

1. Lagerungsvorrichtung (401, 404) zum Lagern eines Drehkörpers unter Verwendung eines einzelnen Lagers (1) oder einer Struktur mit mehreren Lagern (1) und einem Abstandshalter,
wobei das einzelne Lager (1) oder jedes der mehreren Lager (1) einen Innenring (4) und einen Außenring (2) umfasst,
**dadurch gekennzeichnet, dass** die
Lagerungsvorrichtung einen Wärmeflusssensor (7) umfasst, der am Innenring (4), am Außenring (2) oder am Abstandhalter angeordnet ist und einen Wärmefluss erfasst,
wobei
der Wärmeflusssensor (7) an der radial inneren Seite des Außenrings (2) angeordnet ist,
der Abstandhalter einen Außenringabstandhalter (13) und einen Innenringabstandhalter (14) umfasst und
der Außenringabstandhalter (13) ein nicht drehbarer Seitenabstandhalter ist,
der Außenringabstandhalter (13) umfasst
einen Hauptkörperabschnitt, der in axialer Richtung des einzelnen Lagers (1) oder jedes der mehreren Lager (1) an den Außenring (2) angrenzt, wobei der Hauptkörperabschnitt mit einem Zwischenraum zwischen dem Hauptkörperabschnitt und dem Innenringabstandhalter (14) in radialer Richtung des einzelnen Lagers (1) oder jedes der mehreren Lager (1) angeordnet ist, und
einen Vorsprung (19), der von einer Seitenfläche des Hauptkörperabschnitts in Richtung einer Außendurchmesserfläche des Innenrings (4) vorsteht, und
wobei der Wärmeflusssensor (7) an dem Vorsprung (19) befestigt ist, um der Außenfläche des Innenrings (4) zugewandt zu sein.

2. Lagerungsvorrichtung (401, 404) gemäß Anspruch 1, die ferner eine Anomaliediagnoseeinheit (100) umfasst, die eine Anomalie des einzelnen Lagers (1) oder jedes der mehreren Lager (1) auf der Grundlage einer Ausgabe des Wärmeflusssensors (7) diagnostiziert.

3. Lagerungsvorrichtung (401, 404) gemäß Anspruch 2, die zusätzlich zu dem Wärmeflusssensor (7) einen Temperatursensor (22) umfasst, wobei die Ausgabe des Wärmeflusssensors (7) und eine Ausgabe des Temperatursensors (22) an die Anomaliediagnoseeinheit (100) übertragen werden und die Anomaliediagnoseeinheit (100) die Anomalie des einzelnen Lagers (1) oder jedes der mehreren Lager (1) auf der Grundlage der Ausgabe des Wärmeflusssensors (7), der Ausgabe des Temperatursensors (22) und eines Drehzahlsignals diagnostiziert.

4. Lagerungsvorrichtung (404) nach einem der Ansprüche 1 bis 3, die ferner einen Zufuhrweg (31a, 31b) umfasst, der Schmierflüssigkeit in einen Innenraum des einzelnen Lagers (1) oder jedes der mehreren Lager (1) zwischen dem Innenring (4) und dem Außenring (2) zuführt, wobei
der Zufuhrweg (31a, 31b) mit mindestens einer Zufuhröffnung versehen ist, die so angeordnet ist, dass sie dem Innenraum zugewandt ist, und
wenn die Lagerungsvorrichtung (404) in axialer Richtung des einzelnen Lagers (1) oder jedes der mehreren Lager (1) betrachtet wird, der Wärmeflusssensor (7) mit einem Zwischenraum zwischen dem Wärmeflusssensor (7) und der mindestens einen Zufuhröffnung in Umfangsrichtung des einzelnen Lagers (1) oder jedes der mehreren Lager (1) angeordnet ist.

5. Lagerungsvorrichtung (404) gemäß Anspruch 4, wobei
der Zufuhrweg (31a, 31b) mit mehreren Zufuhröffnungen (32a, 32b) versehen ist, die jeweils so angeordnet sind, dass sie dem Innenraum zugewandt sind,
die mehreren Zufuhröffnungen (32a, 32b) mit einem Zwischenraum zwischen den mehreren Zufuhröffnungen (32a, 32b) in Umfangsrichtung angeordnet sind, und
wenn die Lagerungsvorrichtung (404) in axialer Richtung betrachtet wird, der Wärmeflusssensor (7) in Umfangsrichtung in der Mitte zwischen zwei benachbarten Zufuhröffnungen der mehreren Zufuhröffnungen (32a, 32b) angeordnet ist.

6. Lagerungsvorrichtung (404) gemäß Anspruch 4 oder 5, die ferner einen Auslassweg (35a, 35b) umfasst, der die Schmierflüssigkeit aus dem Innenraum des einzelnen Lagers (1) oder jedes der mehreren Lager (1) zwischen dem Innenring (4) und dem Außenring (2) auslässt, wobei
der Auslassweg (35a, 35b) mit mindestens einer Auslassöffnung (36a, 36b) versehen ist, die so angeordnet ist, dass sie dem Innenraum zugewandt ist,
wenn die Lagerungsvorrichtung (404) in axialer Richtung betrachtet wird, die mindestens eine Auslassöffnung (36a, 36b) mit einem Zwischenraum zwischen der mindestens einen Auslassöffnung (36a, 36b) und der mindestens einen Zufuhröffnung in Umfangsrichtung angeordnet ist, und
wenn die Lagerungsvorrichtung (404) in axialer Richtung betrachtet wird, der Wärmeflusssensor (7) mit einem Zwischenraum zwischen dem Wärmeflusssensor (7) und der mindestens einen Auslassöffnung (36a, 36b) in Umfangsrichtung angeordnet ist.

7. Spindelvorrichtung (500), umfassend:
die in einem der Ansprüche 1 bis 6 genannte Lagerungsvorrichtung; und
ein Gehäuse (18), das die Lagerungsvorrichtung (400, 401, 402, 403, 404) trägt.

## Revendications

1. Dispositif de type palier (401, 404) destiné à supporter un corps en rotation à l'aide d'un palier unique (1) ou d'une structure présentant une pluralité de paliers (1) et un distanceur,
le palier unique (1) ou chacun de la pluralité de paliers (1) incluant une bague intérieure (4) et une bague extérieure (2),
**caractérisé en ce que**
le dispositif de type palier comprend un capteur de flux thermique (7) qui est disposé au niveau de la bague intérieure (4), de la bague extérieure (2), ou du distanceur, et qui détecte un flux thermique,
dans lequel
le capteur de flux thermique (7) est disposé au niveau du côté radialement intérieur de la bague extérieure (2),
le distanceur inclut un distanceur de bague extérieure (13) et un distanceur de bague intérieure (14), et
le distanceur de bague extérieure (13) est un distanceur côté non-rotation,
le distanceur de bague extérieure (13) inclut
une portion formant corps principal adjacente à la bague extérieure (2) dans une direction axiale du palier unique (1) ou de chacun de la pluralité de paliers (1), la portion formant corps principal étant disposée avec un espace interposé entre la portion formant corps principal et le distanceur de bague intérieure (14) dans une direction radiale du palier unique (1) ou de chacun de la pluralité de paliers (1), et
une projection (19) qui se projette depuis une surface latérale de la portion formant corps principal vers une surface de diamètre extérieur de la bague intérieure (4), et
le capteur de flux thermique (7) est fixé sur la projection (19) de façon à faire face à la surface de diamètre extérieur de la bague intérieure (4).

2. Dispositif de type palier (401, 404) selon la revendication 1, comprenant en outre une unité de diagnostic d'anomalie (100) qui diagnostique une anomalie du palier unique (1) ou de chacun de la pluralité de paliers (1) sur la base d'une sortie du capteur de flux thermique (7).

3. Dispositif de type palier (401, 404) selon la revendication 2, comprenant en outre un capteur de température (22) disposé en addition au capteur de flux thermique (7), la sortie du capteur de flux thermique (7) et une sortie du capteur de température (22) étant transmises à l'unité de diagnostic d'anomalie (100), et l'unité de diagnostic d'anomalie (100) diagnostiquant l'anomalie du palier unique (1) ou de chacun de la pluralité de paliers (1) sur la base de la sortie du capteur de flux thermique (7), de la sortie du capteur de température (22), et d'un signal de vitesse de rotation.

4. Dispositif de type palier (404) selon l'une quelconque des revendications 1 à 3, comprenant en outre un trajet d'alimentation (31a, 31b) qui alimente un fluide de lubrification à un espace intérieur du palier unique (1) ou de chacun de la pluralité de paliers (1) entre la bague intérieure (4) et la bague extérieure (2), dans lequel
le trajet d'alimentation (31a, 31b) est doté d'au moins une ouverture d'alimentation disposée de façon à faire face à l'espace intérieur, et
quand le dispositif de type palier (404) est vu dans une direction axiale du palier unique (1) ou de chacun de la pluralité de paliers (1), le capteur de flux thermique (7) est disposé avec un espace interposé entre le capteur de flux thermique (7) et ladite au moins une ouverture d'alimentation dans une direction circonférentielle du palier unique (1) ou de chacun de la pluralité de paliers (1).

5. Dispositif de type palier (404) selon la revendication 4, dans lequel
le trajet d'alimentation (31a, 31b) est doté d'une pluralité d'ouvertures d'alimentation (32a, 32b) disposées chacune de façon à faire face à l'espace intérieur,
la pluralité d'ouvertures d'alimentation (32a, 32b) sont disposées avec un espace interposé entre la pluralité d'ouvertures d'alimentation (32a, 32b) dans la direction circonférentielle, et
quand le dispositif de type palier (404) est vu dans la direction axiale, le capteur de flux thermique (7) est disposé au niveau d'un centre entre deux ouvertures d'alimentation adjacentes de la pluralité d'ouvertures d'alimentation (32a, 32b) dans la direction circonférentielle.

6. Dispositif de type palier (404) selon la revendication 4 ou 5, comprenant en outre un trajet d'évacuation (35a, 35b) qui évacue le fluide de lubrification hors de l'espace intérieur du palier unique (1) ou de chacun de la pluralité de paliers (1) entre la bague intérieure (5) et la bague extérieure (2), dans lequel
le trajet d'évacuation (35a, 35b) est doté d'au moins une ouverture d'évacuation (36a, 36b) disposée de façon à faire face à l'espace intérieur,
quand le dispositif de type palier (404) est vu dans la direction axiale, ladite au moins une ouverture d'évacuation (36a, 36b) est disposée avec un espace interposé entre ladite au moins une ouverture d'évacuation (36a, 36b) et ladite au moins une ouverture d'alimentation dans la direction circonférentielle, et
quand le dispositif de type palier (404) est vu dans la direction axiale, le capteur de flux thermique (7) est disposé avec un espace interposé entre le capteur de flux thermique (7) et ladite au moins une ouverture d'évacuation (36a, 36b) dans la direction circonférentielle.

7. Dispositif de type broche (500) comprenant :
le dispositif de type palier selon l'une quelconque des revendications 1 à 6 ; et
un boîtier (18) qui supporte le dispositif de type palier (400, 401, 402, 403, 404).
